(19) Europäisches Patentamt

European Patent Office

Office européen des brevets

(11) **EP 4 144 812 A1**

(12) # EUROPEAN PATENT APPLICATION
published in accordance with Art. 153(4) EPC

(43) Date of publication:
**08.03.2023  Bulletin 2023/10**

(21) Application number: 20933811.0

(22) Date of filing: **27.04.2020**

(51) International Patent Classification (IPC):
*C09J 11/06* (2006.01)        *C09J 107/00* (2006.01)
*C09J 7/21* (2018.01)        *C09J 7/24* (2018.01)
*C09J 7/29* (2018.01)

(52) Cooperative Patent Classification (CPC):
**C09J 7/21; C09J 7/24; C09J 7/29; C09J 11/06;
C09J 107/00**

(86) International application number:
**PCT/JP2020/018015**

(87) International publication number:
**WO 2021/220363 (04.11.2021 Gazette 2021/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Teraoka Seisakusho Co., Ltd.
Tokyo 140-8711 (JP)**

(72) Inventors:
• **ASAI Yuushi
Tokyo 140-8711 (JP)**
• **OKAMURA Yuuki
Tokyo 140-8711 (JP)**

(74) Representative: **Bianchetti & Minoja SRL
Via Plinio, 63
20129 Milano (IT)**

(54) **ADHESIVE TAPE**

(57)    To provide an adhesive tape that is difficult to deform, can suppress stickiness on the sides of the tape, and can reduce the emission of greenhouse gases, an adhesive tape of the present invention is an adhesive tape including a base material made by laminating polyolefin to plant-derived fibers, and an adhesive layer provided on at least one side of the base material, wherein the adhesive layer includes natural rubber, a wood-based filler, a plant-derived plasticizer, and a tackifier. The bio-based degree of the adhesive tape is 50% or more, and can be set to 90% or more by using bio-polyolefin as the polyolefin for the base material and by using a plant-derived tackifier.

EP 4 144 812 A1

## Description

### TECHNICAL FIELD

This invention relates to an adhesive tape that is suitably used as packaging and curing materials.

### BACKGROUND ART

Conventionally, cloth adhesive tapes with a structure in which a polyethylene resin layer is provided on one side of a woven fabric using rayon spun yarn for the warp and weft yarns and a rubber-based layer on the other side are used for packaging, curing, and other applications. A rubber-based adhesive of the adhesive tape used for such applications is manufactured by kneading, for example, natural rubber and the like to decrease molecular weight and by mixing it with each compounding material. However, adhesive tape using such rubber-based adhesive has problems such as roll deformation when the tape is rolled, stickiness on the side of the roll due to the rubber-based adhesive sticking out from the side of the roll, etc.

The cloth adhesive tape used for packaging, curing, etc. is packed after manufacturing and delivered to retailers or retailers' warehouses, where it is displayed in stores or directly delivered to users. Therefore, there is a risk of deformation due to contact between the tapes during delivery, or the tape sides being subjected to load, causing the packaging material and tape sides to stick together, making the packaging material difficult to peel off, and other defects. Tapes with thick adhesive layers are particularly susceptible to this problem, and there is a need to suppress such deformation and side stickiness.

On the other hand, since the adhesive tape is peeled off and incinerated after being used for packaging or curing purposes, emission of greenhouse gases such as carbon dioxide is a problem when petroleum-derived materials are used in large quantities. Patent Document 2 can be cited as a technology for controlling the emission of greenhouse gases from adhesive tapes. Patent Document 2 discloses a technology for controlling the emission of greenhouse gases from the adhesive tape, which uses bio-based materials for the base material. However, since most of the adhesive components are petroleum-derived materials, a bio-based degree, which is the ratio of bio-based materials in the total material, is low. This has the problem that the effect of reducing the emission of greenhouse gases is limited.

In addition, rubber-based adhesives used for adhesive tapes conventionally contain a large amount of heavy calcium carbonate as a filler, and have been widely used because of their low cost and availability. However, when adhesive tape containing a large amount of heavy calcium carbonate is incinerated, carbon dioxide is generated by calcination of the heavy calcium carbonate, resulting in the emission of a large amount of greenhouse gases. Therefore, there is a need to use a wood-based filler, which can be substituted for heavy calcium carbonate, in adhesive tapes to reduce the emission of greenhouse gases from incineration. However, when the wood-based filler is used as a filler in an adhesive, the dispersibility of the filler in the adhesive decreases, resulting in a decrease in the smoothness of the adhesive surface due to a decrease in the coating property of the adhesive to the substrate, causing a decrease in adhesive properties.

### LIST OF PRIOR ART DOCUMENTS

### PATENT DOCUMENTS

Patent Document 1: WO 2015/056499 A1

### SUMMARY OF INVENTION

### PROBLEMS TO BE SOLVED BY THE INVENTION

The object of the present invention is to provide an adhesive tape that is difficult to deform, can suppress stickiness on the sides, and can reduce the emission of greenhouse gases while meeting the required characteristics of adhesive tape, such as adhesive strength and holding force.

The inventors have intensively investigated for dissolving the aforementioned problems, the following configuration has been adopted to solve such problems.

That is, an adhesive tape of the present invention is an adhesive tape including a base material made by laminating polyolefin to plant-derived fibers, and an adhesive layer provided on at least one side of the base material, wherein the adhesive layer includes natural rubber, a wood-based filler, a plant-derived plasticizer, and a tackifier.

**EFFECTS OF THE INVENTION**

The adhesive tape of the present invention can improve the shape stability of the adhesive by using a plant-derived wood-based filler, can be less deformable compared to mineral-derived fillers such as heavy calcium carbonate, and can reduce the stickiness on the sides of the tape. By using a plant-derived plasticizer as a softening component of the adhesive, the smoothness of the adhesive surface can be maintained even when the wood-based filler is used, and the reduction in required properties can be suppressed. Furthermore, because the adhesive tape of the present invention contains more plant-derived materials than conventional products, it is possible to control the increase of carbon dioxide in the air due to incineration and to prevent the emission of carbon dioxide due to calcination of heavy calcium carbonate.

**EMBODIMENTS OF THE INVENTION**

The adhesive tape of the present invention is an adhesive tape including a base material made by laminating polyolefin to plant-derived fibers, and an adhesive layer provided on at least one side of the base material.

[Adhesive Layer]

The adhesive layer includes natural rubber, a wood-based filler, a plant-derived plasticizer and a tackifier. Each component is described below.

(Natural Rubber)

The adhesive components used in the adhesive layer of the present invention includes natural rubber.
Natural rubber is solidified from the sap (latex) collected from the rubber tree called *Hevea brasiliensis.* Natural rubber can be broadly classified into two types: sheet rubber, which is coagulated with formic acid or other acids and dried to form sheets; and block rubber, which is produced by repeatedly crushing and washing cup ramps obtained by natural coagulation in cups for latex collection at rubber plantations, and then pressing after drying.
The classification of the sheet rubber is based on the rating in "International Standard of Quality and Packing for Natural Rubber Grades" (so-called "Green Book"), and the varieties are defined by raw materials and manufacturing methods. The varieties include Ribbed Smoked Sheet (RSS), which is a sheet obtained from the sap of the rubber tree (natural rubber latex) and dried while being smoked, and Crepe, which is a coagulated sap product washed in water and dried with hot air. Sheet rubbers are classified into grades such as RSS #3, RSS #1, Pale Crepe, and Sole Crepe, and other grades. When sheet rubber is used as the adhesive component of the present invention, any one of these grades may be used alone or in combination with several grades.
The block rubber is solidified small grains of rubber that are washed and dried, then pressed and molded. The block rubber is natural rubber graded according to ISO standards (ISO2000). Standard grades TSR20, TSR10, TSR-CV grades to which hydroxylamine hydrochloride is added as a viscosity stabilizer, and the TSR-L grade to which sodium pyrosulfite is added as a discoloration inhibitor. References herein to natural rubber do not include liquid natural rubber, which is described below, unless otherwise noted.

(Wood-based Filler)

The adhesive layer of the present invention contains a wood-based filler as a filler. Examples of wood-based fillers include powdered cellulose and lignin compounds. Among them, powdered cellulose shows an effect of reinforcing the adhesive due to its fibrous shape. Also, because of its bulkiness, material costs can be reduced by decreasing the amount of adhesive in the tape thickness.
Powdered cellulose can be acid-treated cellulose, which is obtained by grinding cellulose raw materials such as pulp that have been acid hydrolyzed with mineral acids (i.e., inorganic acids) such as hydrochloric acid, sulfuric acid, and nitric acid, or mechanically milled cellulose, which is obtained by grinding pulp that has not undergone acid hydrolysis treatment. Powdered cellulose can be selected and used according to the required performance, etc.
The average particle diameter of the wood-based filler is preferably 1 $\mu$m or more and 50 $\mu$m or less. When the average particle diameter is 50 $\mu$m or less, the surface smoothness of the adhesive layer is not impaired. If the adhesive surface is not smooth, the adhesive tape may not have sufficient adhesiveness to the adherend and may not exhibit its adhesive performance sufficiently. If the average particle diameter is 1 $\mu$m or more, the desired bulkiness can be obtained, the thickness of the adhesive layer can be secured, and the increase in the amount of adhesive in the tape thickness can be suppressed, thereby reducing the increase in material cost. The average particle diameter employed here is the median diameter indicated by D50.

The added amount of the wood-based filler is preferably 10 to 250 parts by mass, more preferably 50 to 150 parts by mass to 100 parts by mass of natural rubber. If the amount is 10 parts by mass or more, the increase in the rubber elasticity of the adhesive can be suppressed and the reduction of the coatability when the adhesive is applied to the base material can be suppressed. On the other hand, if the amount is 250 parts by mass or less, the decrease in rubber elasticity of the adhesive can be suppressed and the decrease in adhesive performance can be prevented.

(Plasticizers)

The adhesive layer of the present invention contains a plant-derived plasticizer as a softening component of the adhesive. Liquid natural rubber, liquid farnesene rubber, soybean oil, sunflower oil, rapeseed oil, cottonseed oil, linseed oil, corn oil, canola oil, palm oil, or modified versions thereof (such as epoxidized soybean oil) can be used as the plant-derived plasticizer. Any one of these plant-derived plasticizers may be used alone, or a plurality thereof may be used in combination.

When liquid natural rubber is used as the plant-derived plasticizer, the dispersibility of each component of the adhesive can be improved because a rapid decrease in viscosity can be suppressed when the adhesive is blended. When vegetable oil such as soybean oil is used, the dispersibility and cohesiveness of each component of the adhesive can be improved because both vegetable oil and wood-based filler have a polar group so as to have a high affinity.

Liquid natural rubber is obtained by depolymerizing natural rubber. Examples of the methods of depolymerizing include, for example, a method for crevating rubber molecular by mechanochemical reaction using shear force with a roller machine or so, a decomposition method due to a photochemical reaction by irradiating the rubber solution with UV light, a chemical oxidative decomposition method using phenylhydrazine, a method of air oxidation in the presence of radical generators, or the like.

The weight average molecular weight (Mw) of liquid natural rubber is preferably 100,000 or less, more preferably 80,000 or less, and even more preferably 40,000 or less. When the Mw is 100,000 or less, the decrease in wettability of the adhesive layer is suppressed so as to prevent deterioration of sticking properties at low temperature.

The addition amount of the plant-derived plasticizer is preferably 5 to 50 parts by mass to 100 parts by mass of natural rubber, and more preferably 10 to 30 parts by mass. If the amount is 5 parts by mass or more, a decrease in the wettability of the adhesive layer can be suppressed, and deterioration of sticking property at low temperatures can be prevented. If the amount is 50 parts by mass or less, the plasticizer does not bleed, thereby contamination of the adherend and changes over time in adhesive performance can be suppressed.

(Tackifier)

The adhesive layer of the present invention contains a tackifier. By using a plant-derived tackifier as the tackifier, the bio-base degree can be further improved. Examples of the plant-derived tackifiers include terpene resins, terpene phenolic resins, rosin resins, and rosin ester resins. Among them, terpene resins are particularly suitable because of their high bio-based degree and reduced the emission of carbon dioxide. Any one type of tackifier may be used alone, or a plurality of types may be used in combination.

The tackifier is preferably selected from those having a softening point in a range of 70 to 150°C. By having a softening point of 70°C or higher, the tackifier prevents the adhesive layer from losing adhesive strength and also prevents stickiness on the sides of the adhesive tape. By having a softening point 150°C or low, the tackifier has excellent compatibility with natural rubber and can suppress the decrease in adhesive strength. The softening point of the tackifier is preferably 80°C or higher and 125°C or low. Although product catalogs indicate a variation of $\pm 5$°C in the softening point, the central value shall be taken as the above range and shall encompass these variations.

Examples of the terpene resins include unmodified terpene polymers such as $\alpha$-pinene polymer, $\beta$-pinene polymer, and limonene polymer; and terpene polymers modified by one or more treatments selected from phenolic modification, aromatic modification, hydrogenation modification, and hydrocarbon modification, etc. Examples of the modified terpene polymers include terpene phenolic resin and aromatic-modified terpene resin. Any one of these types may be used alone or in combination.

Examples of the rosin resins include unmodified rosins such as gum rosin, wood rosin, and tall oil rosin; modified rosins in which the unmodified rosins are modified by one or more treatments selected from hydrogenation, disproportionation, polymerization, and chemical modification; various rosin derivatives.

Examples of the rosin derivatives include rosin esters in which the unmodified rosins or modified rosins are esterified with alcohols; unsaturated fatty acid-modified rosins in which the unmodified rosins or the modified rosins are modified with unsaturated fatty acids; unsaturated fatty acid-modified rosin esters in which the rosin esters are modified with unsaturated fatty acids; rosin alcohols in which a carboxyl group in the unmodified rosins, the modified rosins, the unsaturated fatty acid-modified rosins or the unsaturated fatty acid-modified rosin esters is subjected to reduction; metal salts of the rosins such as the unmodified rosins, the modified rosins, and various rosin derivatives, particularly metal salts of the rosin esters; rosin phenolic resins obtained by acid-catalyzed addition and thermal polymerization of phenol to rosins such as the unmodified rosins, the modified rosins, and various rosin derivatives; acid modified rosins in which the unmodified rosins or the modified rosins are modified with acids such as acrylic acid, fumaric acid, or maleic acid; acid modified rosin esters in which the rosin esters are modified with acids such as acrylic acid, fumaric acid, or maleic acid. Any one of these types may be used alone or in combination.

The addition amount of the tackifier is preferably 30 to 150 parts by mass, and more preferably from 60 to 120 parts by mass for 100 parts by mass of natural rubber. If the amount of the tackifier is 30 parts by mass or more, the decrease in adhesive strength can be suppressed, and if the amount is 150 parts by mass or less, the decrease in re-peeling capability when peeling the adhesive tape can be suppressed.

(Other Components)

In addition to the above components, the adhesive layer can contain other components known in the field. Examples thereof include a vulcanizing agent, vulcanization accelerator, a vulcanization aid, an anti-aging agent, a conductive material, a kneading accelerator, a coloring agent, etc.

[Base Material]

The base material used for the adhesive tape is a laminate in which polyolefin is laminated to plant-derived fibers.

(Plant-derived Fibers)

Examples of the plant-derived fibers include rayon, cotton, kapok, flax, ramie, hemp, yellow hemp, Manila hemp, sisal, hemp palm, coconut palm and cupra. Any one of the plant-derived fibers may be used alone or two or more thereof in combination. The mixed spinning of these fibers is optional, and not limited. The fiber may be in the form of woven, knitted, nonwoven, or any other form, and is not particularly limited.

(Polyolefin)

Examples of polyolefin include high-density polyethylene (HDPE), low-density polyethylene (LDPE), linear low-density polyethylene (LLDPE), polypropylene (PP), ethylene-vinyl acetate copolymer (EVA), ethylene-ethyl acrylate copolymer (EEA) and the like. From the viewpoint of increasing bio-base degree, it is preferable to use bio-polyolefins. Here, the bio-polyolefin means polyolefin produced from bioethanol derived from plants such as sugarcane. The production method of bio-polyolefins is not particularly limited, and various known methods can be employed. For example, commercially available bio-polyethylene can be used as bio-polyolefin. The bio-polyolefin can be used alone or two or more thereof in combination.

[Bio-based Degree]

In the adhesive tape of the present invention, each material can be selected so that the bio-based degree is 50% or higher. The bio-based degree of an adhesive tape refers to the mass percentage of biomass-derived components in the mass of the entire adhesive tape. The bio-based degree of an adhesive tape can be determined by ISO 16620-4 (Determination of biobased mass content). Specifically, the value is calculated by calculating the mass of the adhesive tape as a whole (A) and the mass of the biomass-derived component (B), and then using the following equation:

$$\text{Bio-based degree (\%)} = \{\text{mass (B)} / \text{mass (A)}\} \times 100$$

The higher the bio-based degree, the more substantial carbon dioxide emissions can be reduced. In the present invention, the bio-based degree of the adhesive layer can be effectively increased, which is not possible in the past, and it is easy to achieve a bio-based degree of 90% or higher as an adhesive tape. In cases where biomass-derived components are used in part and petroleum-derived components, etc. are used in the remainder, such as in the case of copolymers and combinations of multiple materials, the bio-based degree is calculated according to the percentage of biomass-derived components in each component.

The biomass-derived components used for the adhesive tape of the present invention refer to renewable plant-derived organic resources, and exclude materials that are depleted by mining, such as fossil resources. The biomass-derived components may be, for example, the above renewable organic resources themselves, or materials obtained by chemically or biologically denatured or synthesized using the above organic resources.

The biomass-derived components also release carbon dioxide when incinerated, but since the amount of carbon dioxide released is the same as that absorbed by plants from the air through photosynthesis during their growth, it can be considered to have no effect on the increase or decrease of carbon dioxide in the air. This concept is called carbon neutrality, and by using the biomass-derived components as the constituent materials of the adhesive tape, it is possible to achieve a reduction in the amount of carbon dioxide.

[Manufacturing Method of Adhesive Tape]

The manufacturing method of adhesive tape is not restricted and can be made by any conventionally known method. For example, the base material is made by forming the plant-derived fibers into a desired woven fabric, etc., and then the olefin resin laminates on both sides or one side of the woven fabric. The laminating method can be any method, such as thermocompression bonding a film of olefin resin over the woven fabric, or extrusion molding the olefin resin into the woven fabric by thermally melting it. Surface treatment can be applied to the surface of the woven fabric or other material that will form the laminate layer before forming the backside layer.

Next, the separately mixed and prepared adhesive composition is applied to the one side or both sides of the base material to form the adhesive layer. The surface of the base material to which the adhesive composition is applied can be surface treated to improve adhesion.

Physical or chemical anchor treatment (AC treatment) is applied as a surface treatment. Physical treatments include corona, UV, and sputtering treatments, while chemical treatments include the application of resins selected from organotitanium, isocyanate, polyethyleneimine, and polybutadiene series. Physical treatment is preferred from the viewpoint of increasing the bio-based degree.

The adhesive layer is formed by coating the adhesive composition with various coating devices. Examples of the coating devices include, for example, calender coaters, roll coaters, die coaters, lip coaters, Myer bar coaters, gravure coaters, etc.

The thickness of the base material is preferably a range of 50 to 500 $\mu$m, more preferably a range of 100 to 300 $\mu$m. The thickness of the base material of 100 $\mu$m or more improves the rigidity of the base material and makes it easier to work with, while the thickness of 500 $\mu$m or less improves adhesion to the uneven surface of the adherend and makes it more difficult to peel off from the adherend.

For example, the amount of adhesive applied per side can be in the range of 30 to 400 g/m$^2$ for the adhesive layer. The thickness of the adhesive tape can be selected from 80 to 900 $\mu$m, depending on the performance and application required of the adhesive tape.

The manufactured adhesive tape is rolled and cut into predetermined widths. The cut adhesive tape is packaged by protecting the sides with, for example, polyethylene film, or by wrapping each roll individually to prevent the sides of the adhesive tape from contacting each other.

The adhesive tape of the present invention can effectively suppress stickiness on the tape sides.

**EXAMPLES**

The invention will be specifically described below with reference to examples. However, the invention is not limited only to these examples. The physical properties, etc. of each raw material are based on the manufacturer's catalog values. The presence or absence of "average" also depends on the description in the catalog.

[Example 1]

Rayon yarns having 30 yarn count was used for both warp and weft yarns to weave a woven fabric with a warp density of 45-threads/inch and a weft density of 35-threads/inch.

Biomass low-density polyethylene (product name "SBC818", density 0.918 g/cm$^3$, manufactured by BRASKEM S. A.) was applied on one side of this woven fabric by extrusion lamination using a T-die at a processing temperature of 300°C to produce a base material with a total thickness of 200 $\mu$m. An adhesive composition was prepared by mixing 100 parts by mass of powder cellulose (1) with an average particle diameter of 32 $\mu$m (product name: KC Flock W-200, manufactured by Nippon Paper Industries Co.) as a filler, 25 parts by weight of liquid natural rubber (1) having average molecular weight (Mw) of 40,000 (product name: DPR-40, manufactured by DPR INDUTRIES INC.) as a plasticizer and 100 parts by mass of terpene resin (product name: YS Resin PX1000, Manufactured by Yasuhara Chemical Co., softening point: 100±5°C) as a tackifier to 100 parts by mass of natural rubber masticated by kneader. This adhesive composition was applied to the other side of the woven fabric using a calender coater to obtain a film thickness of 100 $\mu$m, so that an adhesive tape with a total thickness of 300 $\mu$m was obtained.

[Example 2]

An adhesive composition was prepared in the same manner as in Example 1, except that 80 parts by mass of powdered cellulose (2) (product name: KC Flock W-100, manufactured by Nippon Paper Industries) with an average particle diameter of 37 μm were used as the filler. This adhesive composition was applied to the same base material as in Example 1 to obtain an adhesive tape with a total thickness of 300 μm.

[Example 3]

An adhesive composition was prepared in the same manner as in Example 1, except that 40 parts by mass of powdered cellulose (3) (product name: KC Flock W-50, manufactured by Nippon Paper Industries) with an average particle diameter of 45 μm were used as the filler. This adhesive composition was applied to the same base material as in Example 1 to obtain an adhesive tape with a total thickness of 300 μm.

[Example 4]

An adhesive composition was prepared in the same manner as in Example 1, except that 40 parts by mass of powdered cellulose (4) (product name: KC Flock W-400, manufactured by Nippon Paper Industries) with an average particle diameter of 24 μm were used as the filler. This adhesive composition was applied to the same base material as in Example 1 to obtain an adhesive tape with a total thickness of 300 μm.

[Example 5]

An adhesive composition was prepared in the same manner as in Example 1, except that liquid natural rubber (trade name "DPR-400" manufactured by DPR INDUSTRIES INC) with a weight average molecular weight (Mw) of 80,000 was used as the plasticizer. This adhesive composition was applied to the same base material as in Example 1 to obtain an adhesive tape with a total thickness of 300 μm.

[Example 6]

An adhesive composition was prepared in the same manner as in Example 1, except that 25 parts by mass of soybean oil (product name "Nikka Soybean White Strained Oil", manufactured by J-NIKKA Partners) was used as the plasticizer. This adhesive composition was applied to the same base material as in Example 1 to obtain an adhesive tape with a total thickness of 300 μm.

[Example 7]

An adhesive composition was prepared in the same manner as in Example 1, except that 25 parts by mass of epoxidized soybean oil (product name "ADEKA SIZER O-103P", manufactured by ADEKA) was used as the plasticizer. This adhesive composition was applied to the same base material as in Example 1 to obtain an adhesive tape with a total thickness of 300 μm.

[Comparative Example 1]

Rayon yarns having 30 yarn count was used for both warp and weft yarns to weave a woven fabric with a warp density of 45-threads/inch and a weft density of 3 5-threads/inch. On one side of this woven fabric, low-density polyethylene (product name "NUC8008", density 0.918 g/cm$^3$, manufactured by ENEOS NUC Corporation, hereinafter referred to as "LDPE") was applied by extrusion lamination using a T-die at a processing temperature of 300°C to prepare a base material with a total thickness of 200 μm. An adhesive composition was prepared by mixing 100 parts by mass of natural rubber kneaded by a kneader, 200 parts by mass of heavy calcium carbonate with an average particle diameter of 12 μm (manufactured by MARUO CALCIUM CO., LTD.) as a filler, 25 parts by mass of process oil (product name "MOBILTHERM 610", manufactured by EMG Lubricants Godo Kaisha) as a plasticizer, and 100 parts by mass of C5 resin (product name: T-REZ RC100, manufactured by JXTG Energy, softening point: 95-105°C) as a tackifier. This adhesive composition was applied to the above base material using a calender coater to obtain a film thickness of 100 μm, and an adhesive tape with a total thickness of 300 μm.

[Comparative Example 2]

An adhesive composition was prepared by mixing 100 parts by mass of natural rubber kneaded by a kneader, 180 parts by mass of starch powder (soluble first-grade starch, manufactured by Hayashi Pure Chemical Industry Co.) with particle diameter of 10 μm as a filler, 25 parts by mass of process oil (product name "MOBILTHERM 610", manufactured by EMG Lubricants Godo Kaisha) as a plasticizer, and 100 parts by mass of C5 resin (product name: T-REZ RC100, manufactured by JXTG Energy, softening point: 95-105°C) as a tackifier. This adhesive composition was applied to the same base material as in Comparative Example 1 to obtain an adhesive tape with a total thickness of 300 μm.

<Evaluation Method>

The various properties of the tape samples obtained from each of Examples, and Comparative Examples were tested and evaluated according to the following methods. The results are shown in Tables 1 and 2.

[Adhesive Strength]

Adhesive strength was measured according to Section 10 (Adhesive strength) of JIS Z 0237 (Testing methods of pressure-sensitive adhesive tapes and sheets). Here, the test conditions were as follows: [Adhesive tape width: 10 mm, Peeling angle: 180°, Test temperature: 23°C]

[Holding Force]

Holding force was measured according to Section 13 (Holding force) of JIS Z 0237 (Testing methods of pressure-sensitive adhesive tapes and sheets). Here, the test conditions were as follows: [Area of adhesive tape: width 25 mm × length 25 mm, Weight: 1000 g, Test temperature: 40°C]

[Constant Load Peeling]

The tape with 10-mm width was applied to a stainless steel (SUS304BA) plate in an environment of 23°C and 50%RH, and a 2-kg rubber roller was used to press the tape back and forth once. After 30 minutes of standing in the same environment, 100-g weight was suspended from the end of the tape and a load was applied in a 90-degree direction, and the time until the tape fell was measured at room temperature (23°C).

[Yield Point Load]

A rolled sample, 50-mm width and 25-m wound, was sandwiched between two parallel plates with only the sides of the tape in contact under an environment of 23°C and 50%RH. The stress to failure was measured using a compression tester and the yield point load value was obtained.

[Side Stickiness]

A rolled sample, 50-mm width and 25-m wound, was used and polyethylene packing was placed on the side surface of the roll. Five such rolls were stacked and left in a dryer adjusted to 40°C for 28 days, and after returning to room temperature, the stickiness on the sides of the bottom roll was judged using the following criteria:

○: Polyethylene packing can be easily peeled off.
×: Polyethylene packing is not easily peeled off.

[Table 1]

| Item | Detail | | Example 1 | Example 2 | Example 3 | Example 4 | Example 5 | Example 6 | Example 7 |
|---|---|---|---|---|---|---|---|---|---|
| Adhesive | Natural rubber | part | 100 | 100 | 100 | 100 | 100 | 100 | 100 |
| Filler | Powdered cellulose (1) | part | 100 | - | - | - | 100 | 100 | 100 |
| | Powdered cellulose (2) | part | - | 80 | - | - | - | - | - |
| | Powdered cellulose (3) | part | - | - | 40 | - | - | - | - |
| | Powdered cellulose (4) | part | - | - | - | 120 | - | - | - |
| Plasticizer | Liquid natural rubber (1) | part | 25 | 25 | 25 | 25 | - | - | - |
| | Liquid natural rubber (2) | part | - | - | - | - | 25 | - | - |
| | Soybean oil | part | - | - | - | - | - | 25 | - |
| | Epoxidized soybean oil | part | - | - | - | - | - | - | 25 |
| Tackifier | Terpene resin | part | 100 | 100 | 100 | 100 | 100 | 100 | 100 |
| Tape properties | Tape thickness | $\mu$m | 300 | 300 | 300 | 300 | 300 | 300 | 300 |
| | Adhesive weight | g/m$^2$ | 120 | 110 | 100 | 150 | 130 | 120 | 120 |
| | Bio-based degree | % | 98.6 | 98.5 | 98.5 | 98.8 | 98.7 | 98.6 | 98.6 |
| Test results | Adhesive Strength | N/10mm | 4.6 | 4.3 | 4.8 | 3.3 | 4.1 | 3.8 | 4.8 |
| | Holding Force | min. | 41 | 31 | 23 | 23 | 43 | 32 | 37 |
| | Constant Load Peeling | min. | 33 | 24 | 29 | 31 | 60 | 36 | 11 |
| | Yield Point Load | N/cm$^2$ | 126.8 | 119.5 | 128.6 | 121.9 | 128.1 | 119.3 | 114.7 |
| | Side Stickiness | | ○ | ○ | ○ | ○ | ○ | ○ | ○ |

EP 4 144 812 A1

[Table 2]

| Item | Detail | | Comparative Example 1 | Comparative Example 2 |
|---|---|---|---|---|
| Adhesive | Natural rubber | part | 100 | 100 |
| Filler | Heavy calcium carbonate | part | 200 | - |
| | Starch powder | part | - | 180 |
| Plasticizer | Process oil | part | 25 | 25 |
| Tackifier | C5 resin | part | 100 | 100 |
| Tape properties | Tape thickness | $\mu$m | 300 | 300 |
| | Adhesive weight | g/m$^2$ | 200 | 150 |
| | Bio-based degree | % | 49.6 | 81.0 |
| Test results | Adhesive Strength | N/10mm | 4.9 | 1.9 |
| | Holding Force | min. | 24 | 9 |
| | Constant Load Peeling | min. | 47 | 6 |
| | Yield Point Load | N/cm$^2$ | 90.5 | 81.7 |
| | Side Stickiness | | $\times$ | $\times$ |

## INDUSTRIAL APPLICABILITY

As stated above, the adhesive tape of the present invention is resistant to deformation, according to the results of yield point load values, can suppress stickiness on the sides of the tape and can be widely used in various fields, such as packaging and curing, in the same manner as conventional products. In addition, since it is easy to achieve a bio-based degree of 90% or more, greenhouse (carbon dioxide) gas emissions can be suppressed at a high level.

## Claims

1. An adhesive tape comprising a base material, in which polyolefin is laminated to plant-derived fibers, and an adhesive layer provided on at least one side of the base material, wherein the adhesive layer comprises natural rubber, a wood-based filler, a plant-derived plasticizer, and a tackifier.

2. The adhesive tape according to claim 1, wherein the bio-based degree of the adhesive tape is 50 % by mass or more.

3. The adhesive tape according to claim 1 or 2, wherein the adhesive layer comprises 10 to 250 parts by mass of the wood-based filler, 5 to 50 parts by mass of the plant-derived plasticizer, and 30 to 150 parts by mass of the tackifier to 100 parts by mass of natural rubber.

4. The adhesive tape according to any one of claims 1 to 3, wherein the wood-based filler is powdered cellulose.

5. The adhesive tape according to claim 4, wherein the average particle diameter of the powdered cellurose is 1 to 50 $\mu$m.

6. The adhesive tape according to any one of claims 1 to 5, wherein the plant-derived plasticizer is liquid natural rubber.

7. The adhesive tape according to claim 6, wherein an average molecular weight (Mw) of the liquid natural rubbe is 100,000 or less.

8. The adhesive tape according to any one of claims 1 to 7, wherein the tackifier is a plant-derived tackifier.

9. The adhesive tape according to claim 8, wherein the plant-derived tackifier is terpene resin.

10. The adhesive tape according to any one of claims 1 to 9, wherein the tackifier comprises one tackifier or a combination of two or more tackifiers having a softening point of 70 to 150°C.

11. The adhesive tape according to any one of claims 1 to 10, wherein the plant-derived fiber of the base material is rayon.

12. The adhesive tape according to any one of claims 1 to 11, wherein the polyolefin of the base material is bio-polyolefin.

13. The adhesive tape according to claim 12, wherein the bio-polyolefin is bio-polyethylene.

<table>
<tr><td colspan="2" align="center">**INTERNATIONAL SEARCH REPORT**</td><td colspan="2">International application No.</td></tr>
<tr><td colspan="2"></td><td colspan="2">PCT/JP2020/018015</td></tr>
</table>

A.   CLASSIFICATION OF SUBJECT MATTER
Int.Cl.  C09J11/06(2006.01)i, C09J107/00(2006.01)i, C09J7/21(2018.01)i, C09J7/24(2018.01)i, C09J7/29(2018.01)i
FI: C09J7/29, C09J7/21, C09J7/24, C09J107/00, C09J11/06
According to International Patent Classification (IPC) or to both national classification and IPC

B.   FIELDS SEARCHED

Minimum documentation searched (classification system followed by classification symbols)
Int.Cl.  C09J11/06, C09J107/00, C09J7/21, C09J7/24, C09J7/29

Documentation searched other than minimum documentation to the extent that such documents are included in the fields searched
Published examined utility model applications of Japan        1922–1996
Published unexamined utility model applications of Japan      1971–2020
Registered utility model specifications of Japan              1996–2020
Published registered utility model applications of Japan      1994–2020

Electronic data base consulted during the international search (name of data base and, where practicable, search terms used)
CAplus/REGISTRY(STN)

C.   DOCUMENTS CONSIDERED TO BE RELEVANT

| Category* | Citation of document, with indication, where appropriate, of the relevant passages | Relevant to claim No. |
|---|---|---|
| Y<br>A | WO 2010/095578 A1 (NICHIBAN CO., LTD.) 26 August 2010 (2010-08-26), claims, examples, paragraphs [0032], [0049], [0067], [0068] | 1–5, 8–13<br>6–7 |
| Y<br><br>A | JP 10-036786 A (OJI PAPER CO., LTD.) 10 February 1998 (1998-02-10), claims, examples, paragraphs [0010], [0012] | 1–5, 8–10, 12–13<br><br>6–7, 11 |
| Y | JP 2017-128651 A (KYODO PRINTING CO., LTD.) 27 July 2017 (2017-07-27), claims, paragraphs [0030], [0034] | 1–5, 8–11 |
| Y | WO 2015/056499 A1 (NITTO DENKO CORPORATION) 23 April 2015 (2015-04-23), claims, paragraphs [0006], [0039] | 12–13 |
| A | JP 11-061062 A (OJI PAPER CO., LTD.) 05 March 1999 (1999-03-05), claims, examples | 1–13 |

☐  Further documents are listed in the continuation of Box C.        ☒  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>27 July 2020 | Date of mailing of the international search report<br>11 August 2020 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |

Form PCT/ISA/210 (second sheet) (January 2015)

**INTERNATIONAL SEARCH REPORT**
Information on patent family members

International application No.

PCT/JP2020/018015

```
WO 2010/095578 A1  26 August 2010     CA 2753052 A1
                                       US 2011/0306677 A1
                                       claims, examples, paragraphs [0037],
                                       [0054], [0072], [0073]

JP 10-036786 A      10 February 1998   (Family: none)

JP 2017-128651 A    27 July 2017       (Family: none)

WO 2015/056499 A1   23 April 2015      (Family: none)

JP 11-061062 A      05 March 1999      (Family: none)
```

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2015056499 A1